# EUROPEAN PATENT APPLICATION

(11) **EP 4 825 283 A1**
(43) Date of publication of application: **21.10.2026**
(21) Application number: 26173046.9
(22) Date of filing: 17.04.2026
(51) Int. Cl.: A47J 31/60

(54) **METHOD FOR CLEANING A DISPENSING CIRCUIT OF A SUPER-AUTOMATIC MACHINE AND SUPER-AUTOMATIC MACHINE CONFIGURED TO IMPLEMENT SUCH METHOD**

(30) Priority: 18.04.2025 IT 202500008817
(71) Applicant: Cimbali Group S.p.A., 20082 Binasco (MI) (IT)
(72) Inventor: Dameno, Marco, 20082 Binasco MI (IT); Vecchio, Paolo, 20082 Binasco MI (IT)
(74) Representative: Perani & Partners S.p.A.

(57) **Abstract**

Method for cleaning a dispensing circuit (7) of a super-automatic machine (100) for dispensing hot beverages, wherein:
- the super-automatic machine (100) comprises:
- the dispensing circuit (7), having:
- a source (70) configured to contain a liquid (L),
- a dispensing nozzle (71) through which a hot beverage (H_{B}) obtained from the liquid (L) is dispensed,
- a hydraulic line (72) fluidically connecting the source (70) to the dispensing nozzle (71),
- heating means (31), arranged along the hydraulic line (72), configured to heat the liquid (L) and transform it into the hot beverage (H_{B}),

- a washing system (4) provided with a mixing chamber (42) placed in fluid communication with the hydraulic line (72),

- the method comprises the steps of:
a) supplying the detergent (D) into the mixing chamber (42),
b) supplying water (A) into the mixing chamber (42) and waiting for a certain mixing time interval for the formation of a detergent solution (S),
c) washing the dispensing circuit (7) by making the detergent solution (S) formed in the mixing chamber (42) flow along the hydraulic line (72),
d) rinsing the dispensing circuit (72) with distinct hot water supply acts interspersed with pauses.

## Description

### Technical Field

The present invention relates to a method for cleaning a dispensing circuit of a super-automatic machine, as well as a super-automatic machine for dispensing hot beverages adapted to implement said cleaning method.

### State of the Art

As is known, in automatic hot beverage distribution machines and in professional automatic machines for bars, circuits and specific devices are used for heating and preparing the beverages.

Among these machines are the super-automatic coffee machines, in which the operator only has the task of interacting with the user interface to obtain the preparation and dispensing of the coffee-flavored beverage.

The super-automatic coffee machines are equipped with at least one hopper adapted to contain coffee beans, a grinding unit to reduce the coffee beans to powder, and an infusion unit for the preparation and dispensing of the coffee-flavored beverage. Completing the solution are a hot water generator, an electric pump to send the hot water from the boiler to the infusion unit, and a dispensing point through which the coffee can be dispensed into a cup. Obviously, the preparation circuit also comprises valve means to manage the circuit layout.

In the case where the machine must prepare, in addition to coffee, also milk-based beverages, said machine must comprise a source for containing the milk or the milk jug. In addition, the machine must also be provided with a steam generator, a heating unit, adapted to receive the steam flow for heating the milk, and a pumping means to send the milk to the heating unit or directly to the milk dispensing point.

In order for the beverage dispensing circuits to work correctly, it is necessary to perform periodic cleaning and sanitization operations in accordance with what is prescribed by the machine manufacturer.

The cleaning of the internal circuits of the machine is performed by making the cleaning and sanitization liquid flow through them. In detail, the washing of the internal conduction lines of the coffee machine involves the connection, by means of appropriate shut-off valves, with one or more external sources containing washing solutions consisting of a liquid solvent in which a detergent solute is dissolved, suitable for the removal of scale and/or coffee and/or for the cleaning of the conduction lines.

In the prior art, there are several documents in which the ordinary maintenance of the circuits for beverage preparation is described.

For example, in document US20090293733A1, the maintenance of the internal circuits of a coffee machine is described through the mixing of a solute with mains water and sending the obtained mixture to the hydraulic circuits related to the conduction and treatment of milk and coffee.

In the machine described in US20090293733A1, the detergent solution is made in a suitable tray where the mixing of water with the detergent solute occurs. The detergent solution thus obtained is then made to flow along the internal circuit of the coffee machine and, after having passed through the infusion chamber, is conveyed into a drainage basin.

The solution described in US20090293733A1 is not, however, free from drawbacks as it is not always able to guarantee an appropriate level of cleaning of its internal circuits.

In the sector of super-automatic machines for the production of hot beverages, the need is therefore felt to have machines available that are capable of performing cleaning operations in an effective and efficient manner, that is, capable of achieving a good level of cleaning while minimizing the consumption of the products used for this purpose.

### Object of the Invention

In this context, the task at the basis of the present invention is to propose a method for cleaning a dispensing circuit of a super-automatic machine and a super-automatic machine for dispensing hot beverages that overcome the drawbacks of the cited prior art.

In particular, an object of the present invention is to provide an effective and efficient method for cleaning the coffee dispensing circuit that can be performed autonomously by a super-automatic coffee machine.

A further object of the present invention is to provide a super-automatic machine for dispensing hot beverages capable of efficiently and effectively performing the cleaning and sanitization operations of the dispensing circuit.

It is therefore an object of the present invention to provide a method for cleaning the dispensing circuit of a super-automatic machine and a super-automatic machine for dispensing hot beverages capable of reducing the consumptions associated with the cleaning operations, while at the same time optimizing the effectiveness of cleaning and sanitization of the dispensing circuit.

### SUMMARY OF THE INVENTION

In accordance with the present invention, the indicated technical task and the specified objects are achieved by a method for cleaning a dispensing circuit of a super-automatic machine and a super-automatic machine for dispensing hot beverages according to one or more of the claims reported below.

In particular, the present invention proposes to carry out a mixing pause after the detergent (solute) and the water (solvent) have been supplied into the mixing chamber.

This mixing pause allows time for the solvent and the solute to mix, so as to obtain a more effective detergent solution in the cleaning and sanitization operations.

The present invention, after having passed the detergent solution along the dispensing circuit, provides for rinsing the dispensing circuit with distinct hot water supply acts interspersed with pauses.

Advantageously, such a rinsing operation allows for the efficient removal of detergent residues, minimizing the amount of hot water used.

From the above, it emerges that the present invention allows providing a method and a super-automatic machine capable of conducting efficient and effective cleaning operations of the dispensing circuit.

### LIST OF FIGURES

Further characteristics and advantages of the present invention will appear more clearly from the indicative, and therefore non-limiting, description of a preferred but not exclusive embodiment of a method for cleaning a dispensing circuit of a super-automatic machine and of a super-automatic machine for dispensing hot beverages, as illustrated in the accompanying drawings in which:
- Figure 1 shows a schematic representation of the layout of a super-automatic coffee machine for dispensing hot beverages in accordance with a first embodiment present invention,
- Figure 2 shows a schematic representation of the layout of a super-automatic coffee machine for dispensing hot beverages in accordance with a second embodiment present invention,

- Figure 3 shows a side sectional view of the infusion unit of the super-automatic coffee machines schematized in Figures 1 and 2 in a rest configuration,
- Figure 4 shows a side sectional view of the infusion unit of the super-automatic coffee machines schematized in Figures 1 and 2 in a pre-washing configuration,
- Figure 5 shows a side sectional view of the infusion unit of the super-automatic coffee machines schematized in Figures 1 and 2 in a washing configuration,

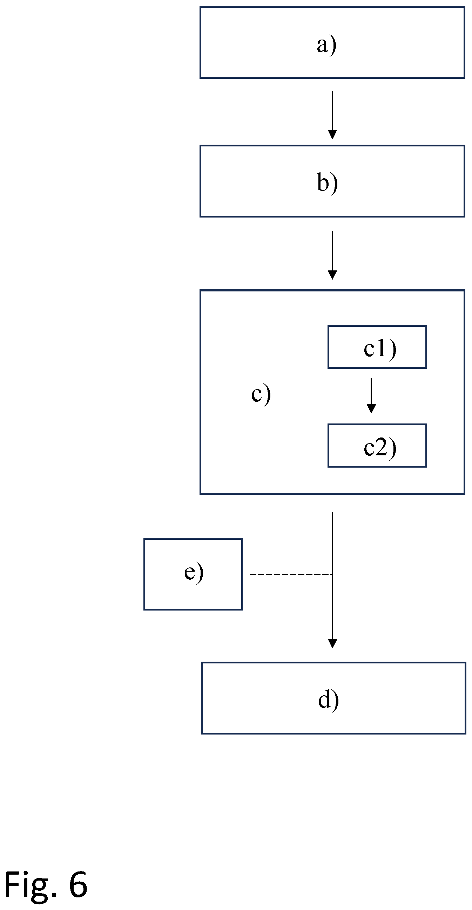

- Figure 6 shows a block diagram of a method for cleaning a coffee dispensing circuit of a super-automatic coffee machine according to an embodiment of the present invention,

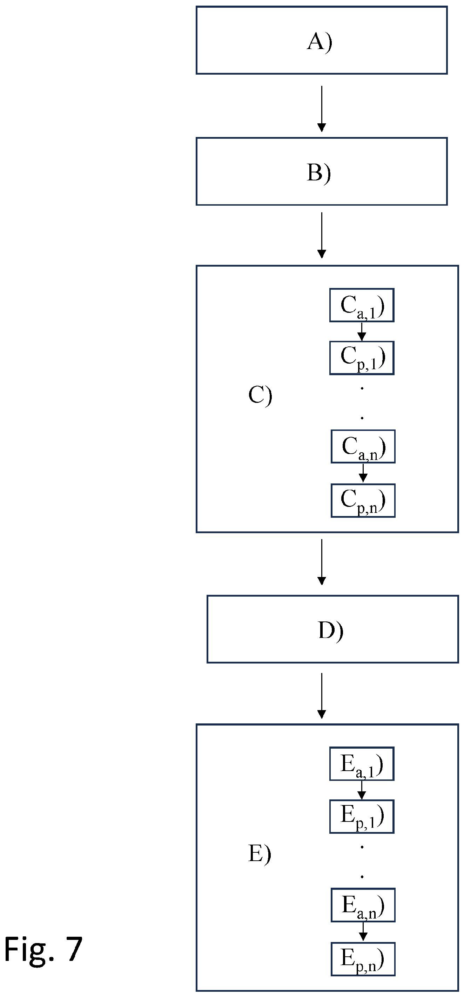

- Figure 7 shows a block diagram of a method for cleaning a second dispensing circuit of the super-automatic coffee machine of Figure 2.

### DETAILED DESCRIPTION

The present description has as its object a method for cleaning a dispensing circuit 7 of a super-automatic machine 100, as well as a super-automatic machine 100 for dispensing hot beverages configured to implement said cleaning method.

In the following, the characteristics of the super-automatic machine 100 will be described first, and then the focus will be on the method for cleaning its dispensing circuit 7.

In the context of the present description, by "super-automatic machine 100" is meant a type of machine for preparing hot beverages in which the user only has the task of interacting with a user interface (not shown in the figures) to obtain the preparation and dispensing of the hot beverage. Therefore, in use, the user is exclusively required to select the desired beverage; the super-automatic machine 100 will then autonomously perform all the necessary steps for the preparation and dispensing of the selected beverage.

The super-automatic machine 100 can be configured to dispense coffee-flavored beverages (e.g., espresso coffee, macchiato coffee, cappuccino, etc.) and/or other types of hot beverages (e.g., herbal teas, tea, milk, hot chocolate, or even simple hot water). Therefore, according to an aspect, the super-automatic machine 100 is configured as a super-automatic coffee machine.

The super-automatic machine 100 (hereinafter, also simply "machine 100") is supplied by a water source 8 adapted to be used, not only in the production of hot beverages, but also in the cleaning and sanitization procedures of its dispensing circuits 1, 7.

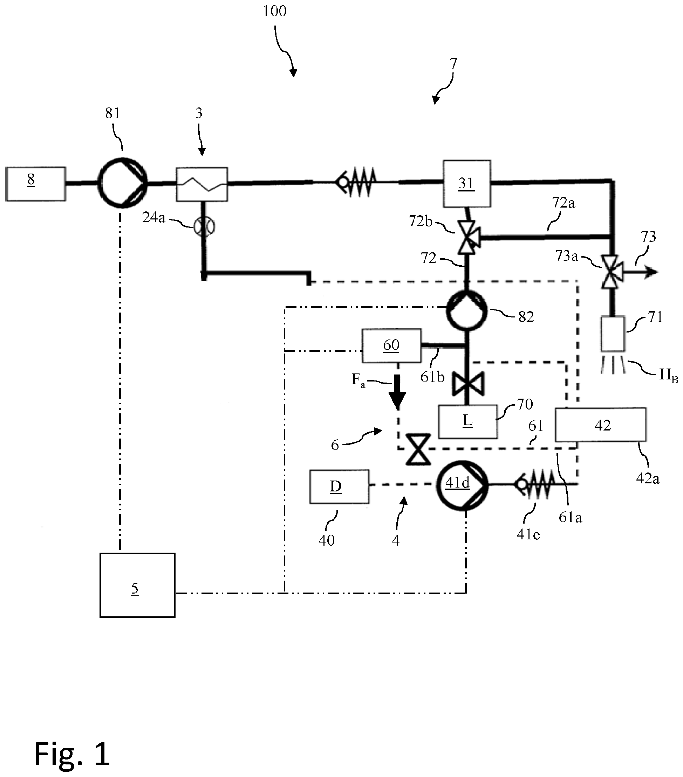

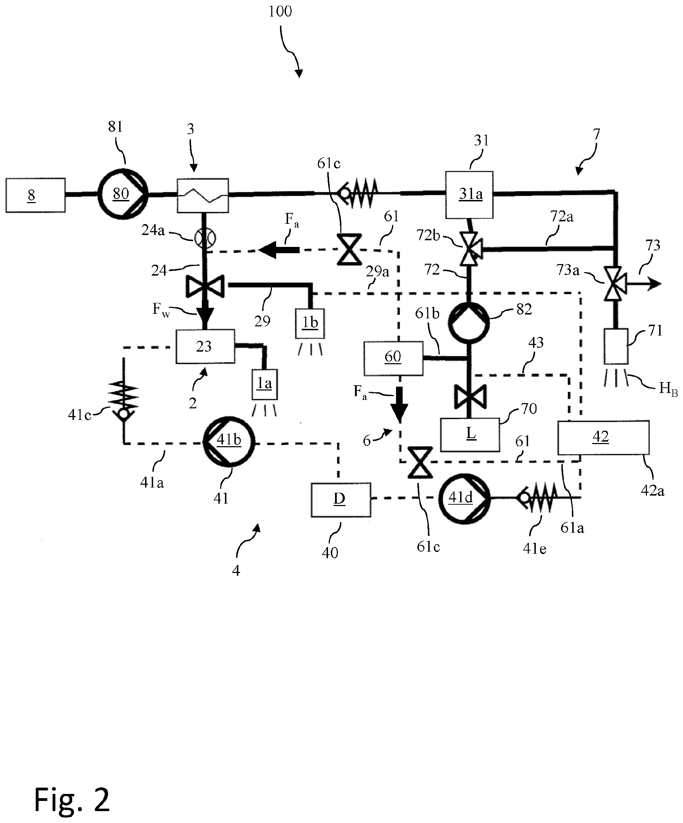

As shown in figures 1 and 2, the machine 100 comprises a dispensing circuit 7 configured to dispense the hot beverage selected by the user into a cup or small cup.

According to an aspect, the dispensing circuit 7 is identifiable with a milk dispensing circuit, that is, a circuit through which the machine 100 dispenses hot milk, both frothed and not, depending on the user's request.

It should be specified that the dispensing circuit 7 can also dispense one of the components that make up the hot beverage requested by the user. For example, if the user has requested a macchiato coffee or a cappuccino, the dispensing line 7 can be used to supply the frothed milk, while the coffee is supplied through a distinct coffee dispensing circuit 1. Further details regarding the eventual coffee dispensing circuit 1 will be reported in a following part of the description.

The dispensing circuit 7 is provided with a source 70 containing or configured to supply a liquid L, from which a hot beverage H_{B} can be obtained.

If the liquid L is milk or any other liquid to be kept at low temperatures, the source 70 preferably comprises a refrigerated container.

The dispensing circuit 7 is provided with a dispensing nozzle 71 through which the hot beverage H_{B} is dispensed, and with a hydraulic line 72 fluidically connecting the source 70 to the dispensing nozzle 71.

Arranged along the hydraulic line 72 between the source 70 and the dispensing nozzle 71, the dispensing circuit 7 has heating means 31 configured to heat the liquid L and transform it into the hot beverage H_{B} to be dispensed.

According to an embodiment, the heating means comprise a heating chamber 31a configured to receive water vapor, for example produced by the heating members 3 (e.g., boiler) of the coffee dispensing circuit 1 described below. In its motion along the hydraulic line, the liquid L passes through the heating chamber 31 where, due to the effect of the heat released by the water vapor, it increases its own temperature, thus becoming the desired hot beverage H_{B}.

If the machine 100 also provides for the dispensing of cold beverages, the hydraulic line 72 may have a bypass section 72a configured to allow the flow of the liquid L to bypass the heating means 31. In this case, along the hydraulic line 72 there is a three-way valve 72b, configured to selectively direct the liquid towards the heating means 31 or towards the bypass section 72a.

As shown in figures 1 and 2, the machine 100 also comprises a washing system 4 usable in the periodic maintenance operations in which the dispensing circuit 7 is cleaned and sanitized.

It is well to specify that in the context of the present description the terms "washing/to wash", "sanitized/to sanitize", and "cleaning/to clean" are to be understood as synonyms describing the same phenomenon of cleaning the circuits of the machine 100.

The washing system 4 is also provided with a mixing chamber 42 adapted to contain a detergent solution S, obtained from the mixing of a detergent D (solute) with water A (solvent), usable for the removal of scale and/or coffee and/or in the cleaning/sanitization of the dispensing circuit 7 and, if present, of the coffee dispensing circuit 1.

The mixing chamber 42 is for example identifiable by a tray 42a that is open above and arranged below the dispensing nozzle 71, so as to be able to receive any liquid flows exiting from the latter and not intercepted by cups, small cups or other types of beverage containers.

The detergent D can be in both liquid form and solid form (e.g., in tablets). It is well to specify that detergents D in liquid form are preferable as those in solid form can lead to the formation of solid residues that could obstruct the hydraulic line 72.

The mixing chamber 42 is placed in fluid communication with the hydraulic line 72 to supply the detergent solution S into it during the cleaning and sanitization operations of the dispensing circuit 7.

According to an aspect, the mixing chamber 42 is distinct from the infusion chamber 23 described below.

According to an aspect, the machine 100 comprises a tank 40 adapted to contain the detergent D to be supplied into the mixing chamber 42, with which it is placed in fluid communication.

According to a further aspect, the mixing chamber 42 is in fluid communication with the water source 8 to receive the water A for the dilution or dissolution of the detergent D.

The machine 100 also comprises pumping members configured to generate liquid flows into and out of the mixing chamber 42.

In detail, the pumping members comprise: a first pump 41d configured to supply the detergent D into the mixing chamber 42, for example by drawing it from the tank 40; and a second pump 81 configured to supply hot water into the mixing chamber 42, for example coming from the water source 8.

According to an aspect shown in figure 2, the mixing chamber 42 is placed in fluid communication with the second pump 81 through an extension 29a of the branch 29 of the coffee hydraulic line 24 introduced below.

The pumping members also comprise a third pump 82 which, during the dispensing of the beverage, is configured to make the liquid L flow from the source 70 along the hydraulic line 72, while, during the cleaning operations, it supplies the content of the mixing chamber 42 along the hydraulic line 72.

Alternatively, in place of the third pump 82, the use of two distinct pumps could be provided, respectively configured to supply the liquid L from the source 70 along the hydraulic line 72 during beverage dispensings and to supply the content of the mixing chamber 42 along the hydraulic line 72 during cleaning operations.

In the embodiment of figure 2, the machine 100 also comprises a coffee dispensing circuit 1 configured to transform the water supplied by the water source 8 into the coffee-flavored beverage selected by the user, dispensed into a cup or small cup through a special dispensing spout 1a.

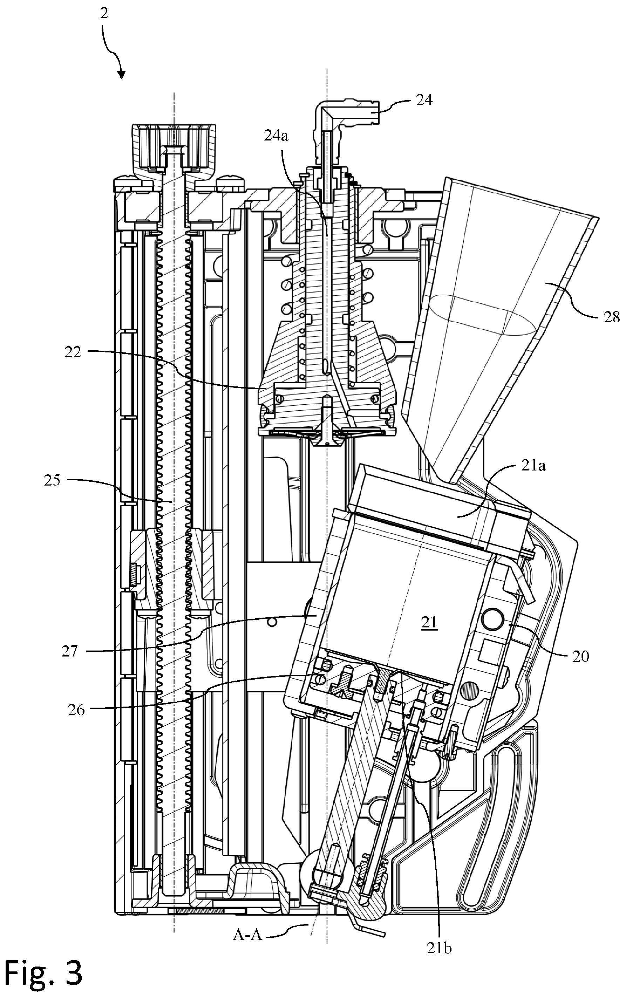

With reference to figures 3-5, the coffee dispensing circuit 1 comprises an infusion unit 2 provided with a cylinder 20, at least one piston 22 insertable into the cylinder 20, and kinematic members 25 adapted to relatively move the cylinder 20 and the piston 22.

The cylinder 20 defines an infusion cavity 21 having an open top 21a and a closed bottom 21b. In use, the infusion cavity 21 is loaded through the top 21a with a dose of ground coffee, obtained, for example, by means of a grinding process performed by a grinding unit (not shown in the figures) of the machine 100 supplied by a hopper (not shown in the figures) containing coffee beans.

In the embodiment shown in figures 3-5, the bottom 21b of the cylinder 20 is defined by a second piston 26 opposable to the piston 22.

In greater detail, still with reference to the embodiment shown in figures 3-5, the cylinder 20 is identified by a cylindrical body 27 extending along an axial direction A-A between: a lower portion closed by the second piston 26 which defines its bottom 21b, and an upper portion open which defines its open top 21a.

The piston 22 has a conformation insertable into the cylinder 20 through the open top 21a. When the piston 22 is inserted into the cylinder 20, it defines with the latter an infusion chamber 23 in which, during the production process of the coffee-flavored beverage, the hot water comes into contact with the previously loaded ground coffee to extract its aromas and organoleptic properties.

According to an aspect, the insertion of the piston 22 through the open top 21a of the cylinder 20 occurs by means of a movement of the cylinder 20 with respect to the piston 22.

According to a further aspect, during the insertion operation of the piston 22 into the cylinder 20, the piston 22 is stationary and it is the cylinder 20 that moves to and from the piston 22.

When inserted into the cylinder 20, the piston 22 thus closes the infusion cavity 21 from the opposite side of the bottom 21b, defining the infusion chamber 23.

Furthermore, when the piston 22 is inserted in the cylinder 20, the piston 22 and the cylinder 20 are mutually movable along a direction of movement X-X which, according to an aspect, is coincident with the axial direction A-A so that, by moving the piston 22 closer to/further from the bottom 21b, it is possible to contract or expand the infusion chamber 23. In other words, the infusion chamber 23 has a variable volume (cubage) depending on the position of the piston 22 with respect to the bottom 21b.

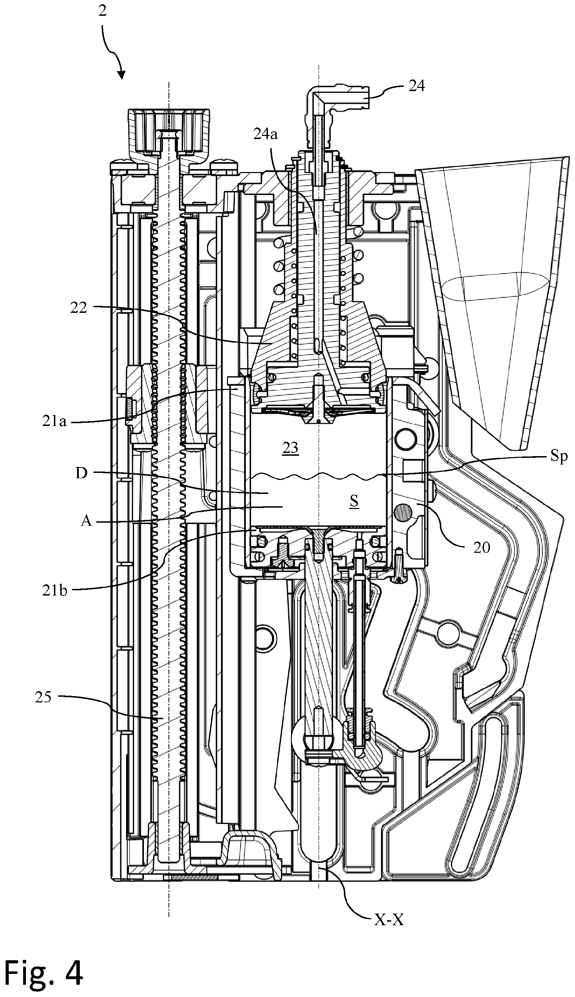

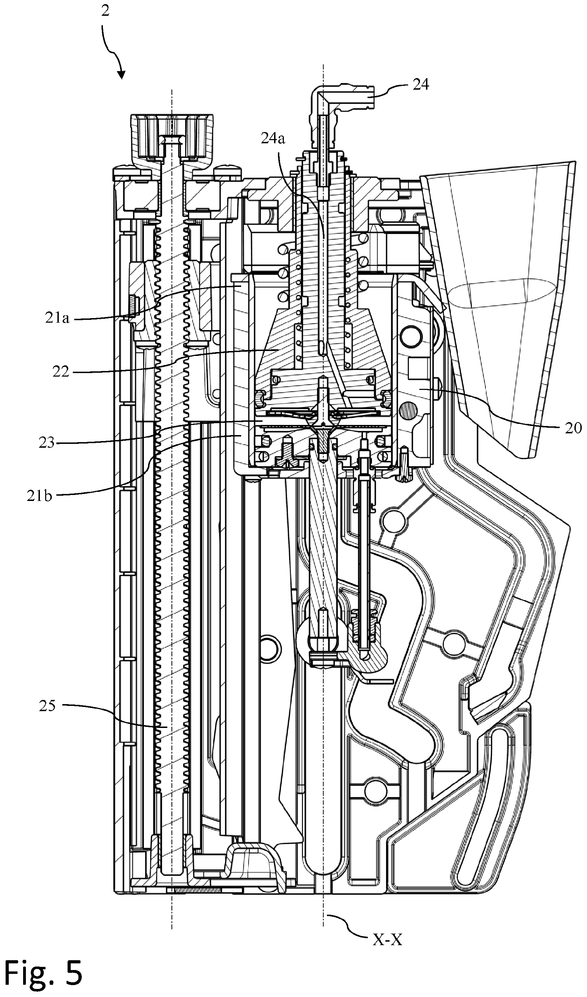

The infusion unit 2 also comprises kinematic members 25 configured to move the cylinder 20 relative to the piston 22 to switch the infusion unit 2 between at least a pre-washing configuration, in which the piston 22 is inserted into the cylinder 20 and arranged at the top 21a (figure 4), and a washing configuration, in which the piston 22 is closer to the bottom 21b with respect to the pre-washing configuration (figure 5) so that, during the washing of the coffee dispensing circuit, the piston 22 comes into contact with a detergent solution S formed in the infusion chamber 23.

According to an aspect, the kinematic members 25 are configured to translate the cylinder 20 relative to the piston 22 along the direction of movement X-X and to rotate the cylinder 20 with respect to the piston 22, so as tobring the infusion unit 2 into a rest configuration (figure 3) in which the cylinder 20 is offset with respect to the piston 22. In the rest configuration, the top 21a is free and the cylinder 20 is loadable with the dose of ground coffee, for example by means of a funnel body 28. In other words, according to an aspect, the kinematic members 25 are configured to move the cylinder 20 with a roto-translatory motion with respect to the piston 22 to switch the infusion unit 2 between the pre-washing, washing, and rest configurations.

In the embodiment shown in figures 3-5, the kinematic members 25 comprise motorization means, a ball screw mechanism driven by the motorization means, and hinging elements.

According to an aspect, the kinematic members 25 comprise grooves or guides made on a frame of the infusion group configured to guide the roto-translatory motion of the cylinder 20 with respect to the piston 22. The kinematic members 25 will not be further described as a person skilled in the art would be able to design them autonomously.

The coffee machine 100 comprises a coffee hydraulic line 24 configured to allow the introduction and discharge of liquids into and from the infusion chamber 23.

During the production of beverages, the coffee hydraulic line 24 is used to supply hot water into the infusion chamber 23 and to discharge the hot beverage obtained through dispensing spout 1a.

As will emerge better in the following, during the washing of the coffee dispensing circuit 1, the coffee hydraulic line 24 is used to supply a flow of water Fw into the infusion chamber 23 and to discharge the flow of water Fw supplied from the infusion chamber 23.

The coffee machine 100 also comprises heating members 3 (e.g., boiler), arranged on the coffee hydraulic line 24 upstream of the infusion chamber 23, configured to heat the flow of water Fw directed towards the infusion chamber 23.

The coffee hydraulic line 24 can also comprise a branch 29, interposed between the heating members and the infusion chamber 23, configured to dispense hot water if this is the beverage requested by the user. In this case, appropriate valve members 24b are provided to selectively supply the flow of hot water to the branch 29 and/or to the infusion chamber 23.

According to an aspect shown in the embodiment of figures 3-5, the coffee hydraulic line 24 comprises, upstream of the infusion chamber 23, a supply section 24c formed in the piston 22.

According to a further aspect, the coffee hydraulic line 24 comprises, downstream of the infusion chamber 23, a discharge section formed in the second piston 26.

In the embodiment of figure 2, the washing system 4 comprises detergent supply members 41 configured to supply the detergent D from the tank 40 to the infusion chamber 23.

Said detergent supply members 41 can for example comprise a detergent hydraulic line 41a fluidically connecting the tank 40 with the infusion chamber 23, and an electric pump 41b arranged along the detergent hydraulic line 41a.

To prevent backflows of the detergent, it is possible to provide a non-return valve 41c arranged on the detergent hydraulic line 41a downstream of the electric pump 41b and upstream of the infusion chamber 23.

In the embodiments shown in figures 1 and 2, the machine 100 comprises a pressurized air supply circuit 6 provided with pumping means 60 configured to generate a flow of pressurized air Fa, and a pneumatic line 61 adapted to convey the flow of pressurized air Fa from the pumping means 60 to the mixing chamber 42.

According to an aspect, if the second dispensing circuit 7 is used to froth the milk, the pneumatic line 61 is also configured to supply the flow of pressurized air Fa into the hydraulic line 72 and to froth the milk flowing therein. To this end, in the embodiment shown in figure 2, the pneumatic line 61 has a first and a second pneumatic section 61a, 61b fluidically connecting the pumping means 60 respectively with the mixing chamber 42 and the hydraulic line 72.

If the machine 100 is provided with the coffee dispensing circuit 1, the pneumatic line 61 is also configured to convey the flow of pressurized air Fa into the infusion chamber 23.

The path taken by the flow of pressurized air Fa generated by the pumping means 60 is controlled by one or more valve means 61c arranged along the pneumatic line 61.

The machine 100 also comprises an electronic control unit 5 placed in signal communication with the pumping members 41d, 81, 82 and, possibly, also with the three-way valve 72b and/or the heating means 31.

If the machine 100 also comprises the coffee dispensing circuit 1, the electronic control unit 5 is also placed in signal communication with: the detergent supply members 41 of the washing system 4, the kinematic members 25 of the infusion unit 2, the heating members 3 and, if the machine 100 is provided with it, with the pumping means 60 of the pressurized air supply line 6.

The electronic control unit 5 is configured to implement the method for cleaning the dispensing circuit 7 and, if present, the coffee dispensing circuit 1, according to what is described below. The method for cleaning the second dispensing circuit 7 - which, preferably, is a circuit for dispensing milk (e.g., hot milk, frothed milk, cold milk) - provides first of all for supplying the detergent D - for example, in a quantity equal to 20 ml - into the mixing chamber 42 (step a).

According to an aspect, in step a), the electronic control unit 5 is configured to activate the first pump 41d to draw a determined dose of detergent from the tank 40 and supply it into the mixing chamber 42.

The dosage of the detergent D supplied in step a) can be performed, for example, by controlling the activation time of the first pump 41d.

The method for cleaning the dispensing circuit 7 then provides for supplying water A - for example, in a quantity equal to 500 ml - into the mixing chamber 42 and waiting for a certain mixing time interval - for example, equal to 3 seconds - to allow the detergent to mix with the water A to originate the detergent solution S (step b).

According to an aspect, in step b), the electronic control unit 5 is configured to activate the second pump 81 to supply into the mixing chamber 42 a determined dose of water drawn from the water source 8.

To accelerate and improve the mixing between water A and detergent D, in the mixing time interval of step b), pressurized air is supplied into the mixing chamber 42. Therefore, preferably, during step b) the mixing chamber 42 is at least partially brought to a pressure higher than atmospheric pressure.

Thanks to the supply of the flow of air Fa into the mixing chamber 42 it is possible to reduce the duration of the mixing time interval and thus speed up the cleaning process.

To supply the flow of air Fa into the mixing chamber 42, according to an aspect, the electronic control unit 5 is configured to activate the pumping means 60 and, if present, to appropriately command the valve means 61c.

Once the mixing time interval is terminated, the cleaning method provides for sanitizing (washing) the dispensing circuit 7 by making the detergent solution S formed in the mixing chamber 42 flow along the hydraulic line 72, and therefore, also through the heating means 31 arranged along it (step c).

According to an aspect, in step c), the electronic control unit 5 activates the third pump 82 which, drawing the detergent solution S from the mixing chamber 42, supplies it along the hydraulic line 72.

Preferably, the sanitizing step c) is divided into a first and a second sanitizing step c1), c2) which are performed in succession.

In the first sanitizing step c1) the detergent solution S travels along the hydraulic line 72 and, after being dispensed from the dispensing nozzle 71, is returned to the mixing chamber 42 - e.g., by passing through the open upper portion of the tray 42a.

In the second sanitizing step c2) the detergent solution S travels again along the hydraulic line 72 to then be discharged upstream of the dispensing nozzle 71 and downstream of the heating means 31, through a specific discharge line 73.

According to an aspect, the dispensing circuit 7 comprises a three-way valve 73a, controllable by the electronic control unit 5, configured to selectively direct a fluid flow towards the dispensing nozzle 71 or towards the discharge line 73.

Preferably, before proceeding with the subsequent step d), downstream of the sanitizing step c), the method for cleaning the dispensing circuit 7 provides for a pause step e), for example having a duration of 5 seconds.

Advantageously, this pause step e) increases the action time of the detergent solution, thus increasing the effectiveness of the cleaning method.

Downstream of the discharge of the detergent solution S from the hydraulic line 72, the method provides for supplying hot water into the mixing chamber 42 and then along the dispensing circuit 7 to rinse the mixing chamber 42 and the dispensing circuit 7 (step d).

According to an aspect, in step d), the electronic control unit 5 is configured to activate the second pump 81, which loads hot water into the mixing chamber 42, and the third pump 82, which transfers the hot water loaded into the mixing chamber 42 into the hydraulic line 72.

Preferably, step d) provides for the alternation of a plurality of water supply acts dₐ), in which hot water is supplied into the mixing chamber 42 and then along the hydraulic line 72, with pauses dₚ), in which the supply of hot water along the secondary hydraulic line 72 and through the mixing chamber 42 is stopped. In other words, step d) provides for supplying water into the secondary hydraulic line 72 in distinct supply acts interspersed with pauses.

To do this, in step d), the electronic control unit 5 is configured to operate the third pump 82 intermittently, that is, alternating activation phases associated with the water supply acts dₐ) with deactivation phases associated with the pauses dₚ).

Advantageously, the execution of the rinsing step d) in distinct supply acts interspersed with pauses allows for an increase in rinsing efficiency, thus reducing water consumption and maximizing the removal of the detergent solution S.

According to an aspect, in each water supply act dₐ) the same quantity of water is supplied into the hydraulic line 72.

According to a further aspect, each pause step dₚ) has the same duration.

A good level of washing is obtainable with three water supply acts dₐ) interspersed with pauses dₚ) having a duration equal to 10 seconds.

According to an aspect, in the rinsing step d), the hot water that travels through the dispensing circuit 7 is discharged upstream of the dispensing nozzle 71 and downstream of the heating means 31, preferably through the discharge line 73.

In the event that the machine 100 also comprises the coffee dispensing circuit 1, a method for cleaning the latter is described below.

The method for cleaning the coffee dispensing circuit 1 provides first of all for bringing the infusion unit 2 into the pre-washing configuration, in which, according to the above, the piston 22 is inserted into the cylinder 20 and with it defines the infusion chamber 23 (step A).

According to an aspect, in step A), the electronic control unit 5 actuates the kinematic members 25 to move the cylinder 20 relative to the piston 22 so as to switch the infusion unit 2 from the rest configuration (figure 3) to the pre-washing configuration (figure 4).

It is well to specify that, during the execution of the cleaning method, net of any coffee residues, the infusion cavity 21 of the cylinder 20 is empty, that is, it is not loaded with coffee powder.

Once the infusion unit 2 has been brought into the pre-washing configuration, a predetermined dose of detergent D - for example, equal to 10 ml - is supplied into the infusion chamber 23 (step B).

According to an aspect, in step B), the electronic control unit 5 activates the electric pump 41b of the detergent supply members 41 for a determined time interval - for example, comprised between 4 and 6 seconds, but preferably equal to 5 seconds - to draw the dose of detergent from the tank 40 and supply it to the infusion chamber 23 through the detergent hydraulic line 41a.

The method then provides for diluting or dissolving the detergent D by supplying a predetermined dose of hot water A - for example, comprised between 25 and 35 ml, but preferably equal to 30 ml - into the infusion chamber 23 through the coffee hydraulic line 24, so as to obtain the detergent solution S described above (step C).

According to an aspect, the supply of the dose of water A occurs in multiple supply acts interspersed with pauses. That is to say that the dose of water A is not supplied all at once but in sub-doses (A1, A2, ... An) dispensed in successive and distinct dispensing acts interspersed with pauses, for example with a duration between 0.1 and 1.5 seconds, in which there is no dispensing of water into the infusion chamber 23. In other words, the dispensing of the dose of water A is intermittent.

Advantageously, this mode of supplying water A improves the mixing with the detergent D, thus improving the efficiency and effectiveness of cleaning and sanitization of the coffee dispensing circuit 1.

According to an aspect, in step C), the electronic control unit 5 activates intermittently a water pump 80 configured to draw water from the source 8 and supply it into the infusion chamber 23 through the coffee hydraulic line 24.

According to a further aspect, the electronic control unit 5 is configured to operate the water pump 80 as a function of the signal of a flow meter 24a arranged along the coffee hydraulic line 24 and also placed in signal communication with the electronic control unit 5.

According to an aspect shown in figure 2, the water pump 80 coincides with the second pump 81.

Preferably, in each dispensing act A1, A2, ... An the same quantity of water is dispensed. Therefore, preferably, the dispensing acts are identical.

Furthermore, preferably, the pauses that separate the dispensing acts all have the same duration.

A good mixing between detergent D and water A is obtainable with three dispensing acts - for example, each bringing 10 ml of water into the infusion chamber 23 if the dose of water A is equal to 30 ml.

Regarding the duration of the pauses, if the infusion chamber 23 is substantially at atmospheric pressure, it is preferable that it has a duration greater than 1 second to ensure good mixing between detergent D and water A.

To accelerate and improve the mixing between detergent D and water A, the flow of air Fa is supplied into the infusion chamber 23 during step C) of dilution or dissolution of the detergent D. Therefore, preferably, the infusion chamber 23 is at least partially brought to a pressure higher than atmospheric pressure during step C).

Thanks to the supply of the flow of air Fa into the infusion chamber 3, it is possible to reduce the duration of the pauses separating the dispensing acts to below 1 second.

To supply the flow of air Fa into the infusion chamber 23, according to an aspect, the electronic control unit 5 is configured to activate the pumping means 60 and, if present, to appropriately command the valve means 61c.

Once the dilution and dissolution step of the detergent D is terminated, the method provides for mutually moving the cylinder 20 and the piston 22 along the direction of movement X-X to bring the infusion unit 2 into the washing configuration, in which, according to what is indicated above, the piston 22 is in contact with the detergent solution S (step D).

If, downstream of the dilution and dissolution step of the detergent, one were already in the washing configuration, that is, if the piston 22 were already in contact with the detergent solution S, the method does not provide for the execution of step D) to pass directly to step E) described below.

Preferably, in the washing configuration 22 the piston is at the free surface Sₚ of the detergent solution S. Therefore, preferably, in step D), the cylinder 20 is moved along the direction of movement X-X until the piston 22 reaches the free surface Sₚ of the detergent solution S.

According to an aspect, in step D), the electronic control unit 5 actuates the kinematic members 25 to move the cylinder 20 relative to the piston 22 so as to switch the infusion unit 2 from the pre-washing configuration (figure 4) to the washing configuration (figure 5).

The method then provides for washing the coffee dispensing circuit 1 by supplying hot water along the hydraulic line 24 and through the infusion chamber 23 of the infusion unit 2 (step E). Passing through the infusion chamber 23, the gradually supplied hot water removes the detergent solution S and transports it along the section of the coffee hydraulic line 24 downstream of the infusion chamber 2.

According to an aspect, in step E), the electronic control unit 5 activates the heating members 3 and the water pump 80 configured to draw water from the source 8 and supply it into the infusion chamber 23 through the coffee hydraulic line 24.

Preferably, the washing step E) is performed by alternating water supply phases Ea), in which hot water is supplied along the coffee hydraulic line 24 and through the infusion chamber 23, with pause phases Ep), in which said supply of hot water is stopped. That is to say, the washing step E) is performed in successive acts of hot water supply interspersed with pauses in which no dispensing occurs.

Advantageously, the washing step E) performed by alternating water supply phases Ea) with pause phases Ep) allows for making the washing process more efficient, reducing the quantity of water used for washing.

According to an aspect, in each water supply phase Ea,1), Ea,2), ... Ea,n) the same quantity of water is dispensed. Therefore, if in step E) a total of 200 ml of water is dispensed, to each water supply phase Ea,1), Ea,2), ... Ea,n) a quantity equal to 200/n ml is dispensed, where n is the number of dispensing phases.

Preferably, the number of dispensing phases is between 5 and 10.

The quantity of water dispensed for each dispensing phase Ea) is for example measured by means of the flow meter 24a.

According to a further aspect, the pause phases Ep,1), Ep,2)... Ep,n) that divide the dispensing phases all have the same duration, for example 30 seconds.

A good washing is obtainable with 5 dispensing phases Ea), interspersed with pause phases Ep) each having a duration of 8 seconds.

At the end of the washing step E), the infusion unit 2 is returned to the rest configuration, where the infusion cavity 21 is loadable with a dose of coffee powder.

It is well to specify that the method for cleaning the dispensing circuit 7 and that of the coffee dispensing circuit are executable independently of each other.

Obviously, a person skilled in the art may make numerous equivalent modifications to the variants described above, without thereby departing from the scope of protection defined by the appended claims.

## Claims

1. Method for cleaning a dispensing circuit (7) of a super-automatic machine (100) for dispensing hot beverages, wherein:
- the super automatic machine (100) comprises:
- the dispensing circuit (7) having:
- a source (70) containing or configured to supply a liquid (L),
- a dispensing nozzle (71) through which a hot beverage (H_{B}) obtained from the liquid (L) is dispensed,
- a hydraulic line (72) fluidically connecting the source (70) to the dispensing nozzle (71),
- heating means (31) arranged along the hydraulic line (72) and configured to heat the liquid (L) and transform it into the hot beverage (H_{B}),
- a washing system (4) comprising a mixing chamber (42) configured to contain a detergent solution (S) obtained by mixing a detergent (D) with water (A), the mixing chamber (42) being placed in fluid communication with the hydraulic line (72),
- the method comprises the steps of:
a) supplying the detergent (D) into the mixing chamber (42),
b) supplying water (A) into the mixing chamber (42) and waiting for a certain mixing time interval for the detergent (D) to mix with the water (A) to produce the detergent solution (S),
c) at the end of the mixing time interval, sanitizing the dispensing circuit (7) by making the detergent solution (S) flow along the hydraulic line (72),
d) after discharging the detergent solution (S) from the hydraulic line (72), rinsing the dispensing circuit alternating:
- water supply actions dₐ), wherein hot water is supplied into the mixing chamber (42) and then along the hydraulic line (72),
with
- pauses dₚ), wherein the supply of hot water along the hydraulic line (72) and through the mixing chamber (42) is stopped.

2. Method according to claim 1, wherein the sanitizing step c) comprises:
c1) a first sanitizing step in which the detergent solution (S) travels along the hydraulic line (72) and, after being dispensed from the dispensing nozzle (71), is returned to the mixing chamber (42),
c2) a second sanitizing step in which the detergent solution (S) again travels through the hydraulic line (72) and then is discharged upstream of the dispensing nozzle (71) and downstream of the heating means (31).

3. Method according to claim 1 or 2, wherein, in the mixing time interval of step b), pressurized air is supplied into the mixing chamber (42).

4. Method according to any one of the preceding claims, wherein, downstream of the sanitizing step c), a pause step e) is carried out before proceeding to step d).

5. Method according to claim 4, wherein the pause phase e) has a duration substantially equal to 5 seconds.

6. Method according to any one of the preceding claims, wherein in the rinsing step d) the hot water that travels through the dispensing circuit (7) is discharged upstream of the dispensing nozzle (71) and downstream of the heating means (31).

7. Method according to one of the preceding claims, wherein:
- the liquid (L) supplied by the source (70) of the dispensing circuit (7) is milk, and
- the dispensing circuit (7) is a milk dispensing circuit.

8. Super-automatic machine (100) for dispensing hot beverages, comprising:
- a dispensing circuit (7) having:
- a source (70) containing or configured to supply a liquid (L),
- a dispensing nozzle (71) for dispensing a hot beverage (H_{B}) obtained from the liquid (L),
- a hydraulic line (72) fluidically connecting the source (70) to the dispensing nozzle (71),
- heating means (31) arranged along the hydraulic line (72) and configured to heat the liquid (L) and transform it into the hot beverage (H_{B}),
- a washing system (4) comprising a mixing chamber (42) configured to contain a detergent solution (S) obtained by mixing a detergent (D) with water (A), the mixing chamber (42) being placed in fluid communication with the hydraulic line (72),
- pumping members (41d, 81, 82) comprising:
- a first pump (41d) configured to supply the detergent (D) into the mixing chamber (42),
- a second pump (81) configured to supply hot water into the mixing chamber (42),
- a third pump (82) configured to supply the detergent solution (S) and the liquid (L) along the hydraulic line (72) of the dispensing circuit (7),
- an electronic control unit (5) placed in signal communication with the pumping members (41d, 81, 82) and configured to implement the method for cleaning the dispensing circuit (7) according to any one of the preceding claims.

9. Super-automatic machine (100) according to claim 8, comprising a pressurized air supply circuit (6) having:
- pumping means (60) placed in signal communication with the electronic control unit (5) and configured to generate a flow of pressurized air (Fₐ),
- a pneumatic line (61) configured to convey the flow of pressurized air (Fₐ) into the mixing chamber (42).

10. Super-automatic machine (100) according to claim 9, wherein:
- the liquid (L) supplied by the source (70) of the dispensing circuit (7) is milk,
- the pneumatic line (61) comprises:
- a first pneumatic section (61a) fluidically connecting the pumping means (60) with the mixing chamber (42),
- a second pneumatic section (61b) fluidically connecting the pumping means (60) with the hydraulic line (72) of the dispensing circuit (7) to froth the liquid (L) supplied by the source (70).

11. Super-automatic machine (100), according to any one of claims 8 to 10, wherein the washing system (4) comprises a tray (42a) defining the mixing chamber (42), said tray (42a) being open above and being arranged below the dispensing nozzle (71).
